# EUROPEAN PATENT APPLICATION

(11) **EP 4 723 550 A1**
(43) Date of publication of application: **08.04.2026**
(21) Application number: 24815890.9
(22) Date of filing: 31.05.2024
(51) Int. Cl.: H04L 9/40, H04L 43/18, H04L 69/22, H04L 43/10, H04L 12/40

(54) **METHOD AND SYSTEM FOR DETECTION OF ROGUE NMEA DEVICE**

(30) Priority: 31.05.2023 KR 20230069920; 05.06.2023 KR 20230072159
(71) Applicant: Hanwha Ocean Co., Ltd., Geoje-si, Gyeongsangnam-do 53302 (KR); Cytur Inc., Seoul 08511 (KR)
(72) Inventor: JEON, Eui Joon, Seoul 03112 (KR); YANG, Woo Yung, Seoul 01785 (KR); KWON, Hyun Mo, Seoul 01410 (KR); JO, Yong Hyun, Seoul 08511 (KR)
(74) Representative: Cabinet Beau de Loménie
(86) International application number: PCT/KR2024/007428
(87) International publication number: WO 2024/248516

(57) **Abstract**

Disclosed herein are a method and system for active and passive detection of a rogue NMEA device, which can identify normal/abnormal NMEA devices on a ship network provided with an NMEA gateway, thereby preventing cyberattacks from unauthorized NMEA devices in a ship.

## Description

### [Technical Field]

The present invention relates to a method and system for active and passive detection of a rogue NMEA device, which can identify normal/abnormal NMEA devices on a ship network provided with an NMEA gateway, thereby preventing cyberattacks from unauthorized NMEA devices in a ship.

### [Background Art]

Recently, all sensor equipment used in ships has been integrated and automated using the NMEA 2000 communication protocol. The CAN communication-based NMEA 2000 protocol was officially announced in October 2001 under the leadership of the U.S. NMEA and has recently been adopted as a sensor network standard for e-Navigation, which is an integrated monitoring solution for ships.

With increasing demand for various communication technologies, such as Ethernet, USB, serial, and wireless communication (for example, Wi-Fi, Bluetooth, etc.) on ship networks, NMEA gateways are being provided to enable mutual communication with NMEA 2000-based navigation and communication equipment.

An NMEA gateway performs the function of converting messages using an interface that enables bidirectional conversion between the NMEA protocol and protocols such as Ethernet, USB, and Wi-Fi.

The International Association of Classification Societies (IACS) UR E26 Identify Cybersecurity Requirements requires the identification of an inventory list of Computer-Based System (CBS) on board ships.

However, since the NMEA gateway is connected to 'n' number of NMEA-based navigation and communication devices and converts CAN-based NMEA messages into protocols for interfaces, such as Ethernet interfaces, for data transmission/reception, it is impossible to confirm whether any of the NMEA devices is included in the inventory list of CBSs according to IACS cybersecurity requirements or whether the corresponding NMEA device is a rogue NMEA device installed by an unauthorized person.

The related art is disclosed in Patent Document 1: Korean Patent Registration No. 10-1321081 (October 23, 2013), Patent Document 2: Korean Patent Registration No. 10-1528547 (June 12, 2015), and Patent Document 3: Korean Patent Laid-open Publication No. 10-2006-0057756 (May 29, 2006).

### [Disclosure]

### [Technical Problem]

It is an object of the present invention to provide a method and system for active and passive detection of a rogue NMEA device, which can identify normal/abnormal NMEA devices on a ship network provided with an NMEA gateway to minimize cyberattack surfaces caused by unconfirmed NMEA devices, prevent cyberattacks from unauthorized NMEA devices in a ship, and ultimately enable compliance with cybersecurity requirement " Identify" stipulated under IACS UR E26.

### [Technical Solution]

In accordance with one aspect of the present invention, a system for active detection of a rogue NMEA device includes comprising: a ship network detector configured to broadcast a packet to an NMEA network over a shipboard Ethernet network to detect NMEA devices; an alarm device being an NMEA device having received the packet broadcasted from the ship network detector, among a plurality of NMEA devices, and a manager server configured to compare a packet received by the alarm device with the packet broadcasted from the ship network detector, wherein, when the packet received by the alarm device matches the packet broadcasted from the ship network detector, the manager server determines that the shipboard Ethernet network is connected to NMEA devices on a shipboard operational technology (OT) network and, when the packet received by the alarm device does not match the packet broadcasted from the ship network detector, the manager server determines that the alarm device is a rogue NMEA device.

In addition, a data frame of the Ethernet packet broadcasted from the ship network detector may contain a CAN packet, and a source address of the CAN packet may be designated as the alarm device.

In accordance with another aspect of the present invention, a method for active detection of a rogue NMEA device includes: a packet transmission step in which a ship network detector broadcasts a packet to an NMEA network over a shipboard Ethernet network to detect NMEA devices; an alarm device designation step in which an NMEA device having received the packet in the packet transmission step is designated as an alarm device; a comparison step in which a manager server compares a packet received by the NMEA device designated as the alarm device in the alarm device designation step with the packet broadcasted from the ship network detector; and a determination step in which, when the packet received by the alarm device is confirmed to be match the packet broadcasted from the ship network detector, the manager server determines that the shipboard Ethernet network is connected to NMEA devices on a shipboard operational technology (OT) network and, when the packet received by the alarm device is confirmed not to match the packet broadcasted from the ship network detector, the manager server determines that the alarm device is a rogue NMEA device.

In addition, in the alarm device designation step, a data frame of the Ethernet packet received from the ship network detector may contain a CAN packet, and a source address of the CAN packet may be designated as the alarm device.

In accordance with a further aspect of the present invention, a method for passive detection of a rogue NMEA device includes: an input step in which a protocol packet delivered to an Ethernet interface via an NMEA gateway is input to a message processing unit; a data frame extraction step in which the message processing unit confirms whether the protocol packet input in the input step is in NMEA format and extracts a data frame stored in a payload field from the protocol packet when the protocol packet is confirmed to be in NMEA format; a PGN processing step in which a PGN processing unit extracts an NMEA-ID from the data frame extracted in the data frame extraction step and extracts a PGN and a source address from the extracted NMEA-ID; a determination step in which a PGN identification unit compares the PGN and the source address extracted in the PGN processing step with a CBS inventory and a PGN determination unit determines that a source of the protocol packet is a rogue NMEA device when the PGN and the source address are confirmed to be absent in the CBS inventory; and an anomaly signal output step in which an anomaly signal output unit outputs an anomaly signal to provide a notification when the source of the protocol packet is determined to be a rogue NMEA device in the determination step.

In addition, in the anomaly signal output step, the anomaly signal output unit may recognize the source address in the header and the PGN and source address in the payload, as identified by the PGN identification unit, as a rogue NMEA device and output an anomaly signal indicative thereof.

In addition, the method for passive detection of a rogue NMEA device may further include: prior to the anomaly signal output step, an NMEA route tracing step in which, when the source of the protocol packet is determined to be a rogue NMEA device, an NMEA route is traced to identify an unconfirmed NMEA device as an abnormal NMEA device.

In accordance with yet another aspect of the present invention, a system for passive detection of a rogue NMEA device includes: a message processing unit configured to receive input of a protocol packet delivered to an Ethernet interface via an NMEA gateway, to confirm whether the input protocol packet is in NMEA format, and to extract a data frame stored in a payload filed from the protocol packet when the protocol packet is confirmed to be in NMEA format; a PGN processing unit configured to extract an NMEA-ID from the data frame extracted by the message processing unit and to extract a PGN and a source address from the extracted NMEA-ID; a PGN identification unit configured to compares the PGN and the source address extracted by the PGN processing unit with a CBS inventory; a PGN determination unit configured to determine that a source of the protocol packet is a rogue NMEA device when the PGN and the source address are confirmed to be absent in the CBS inventory; and an anomaly signal output unit configured to output an anomaly signal to provide a notification when the source of the protocol packet is determined to be a rogue NMEA device by the PGN determination unit.

In addition, the anomaly signal output unit may recognize the source address in the header and the PGN and source address in the payload, as identified by the PGN identification unit, as a rogue NMEA device and output an anomaly signal indicative thereof.

In addition, the system for passive detection of a rogue NMEA device may further include: an NMEA route tracing unit configured to trace an NMEA route and identify an unconfirmed NMEA device as an abnormal NMEA device when the source of the protocol packet is determined to be a rogue NMEA device by the PGN determination unit.

### [Advantageous Effects]

Embodiments of the present invention provide a method and system for active and passive detection of a rogue NMEA device, which can identify normal/abnormal NMEA devices on a ship network provided with an NMEA gateway to minimize cyberattack surfaces caused by unconfirmed NMEA devices, prevent cyberattacks from unauthorized NMEA devices in a ship, and ultimately enable compliance with cybersecurity requirement "Identify" stipulated under IACS UR E26.

### [Description of Drawings]

FIG. 1 is a block diagram of a system for active detection of a rogue NMEA device according to the present invention.
FIG. 2 is a flowchart of a method for active detection of a rogue NMEA device according to the present invention.
FIG. 3 is a block diagram of a system for passive detection of a rogue NMEA device according to the present invention.
FIG. 4 is a diagram illustrating a process of extracting a PGN and a source address in the system for passive detection of a rogue NMEA device according to the present invention.
FIG. 5 is a flowchart of a method for passive detection of a rogue NMEA device according to the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

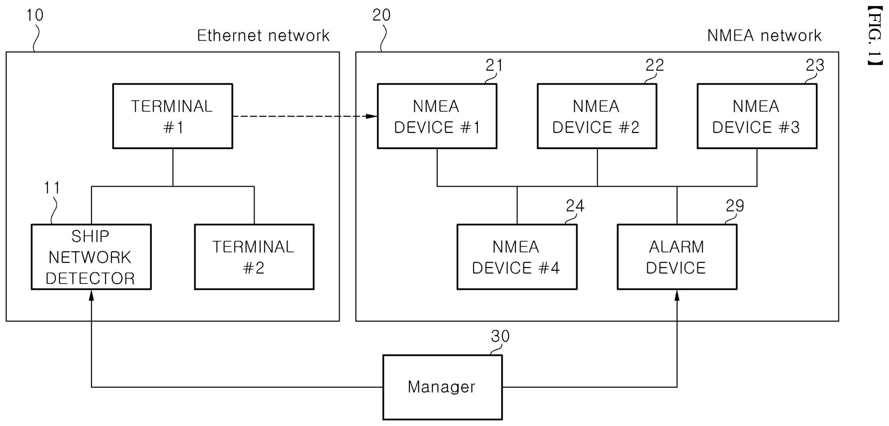

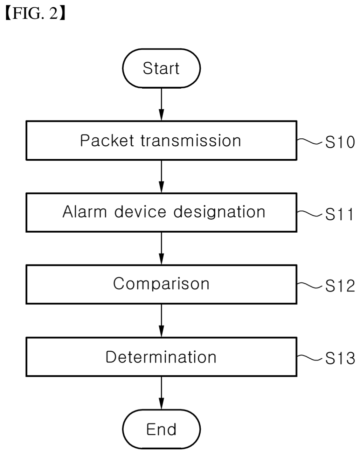

A system and method for active detection of a rogue NMEA device according to the present invention will be described with reference to FIG. 1 and FIG. 2.

FIG. 1 is a block diagram of a system for active detection of a rogue NMEA device according to the present invention. The system for active detection of a rogue NMEA device may include: a ship network detector 11 configured to broadcast a packet to a National Marine Electronics Association (NMEA) network 20 over a shipboard Ethernet network 10 to detect NMEA devices 200; and a manager server 300 configured to, upon receiving, by any of the NMEA devices 200, the packet broadcasted from the ship network detector 11, designate the corresponding NMEA device as an alarm device 290 and compare a packet received by the alarm device 290 with the packet broadcasted from the ship network detector 11.

Herein, "active detection" refers to a method of detecting a rogue NMEA device simply by broadcasting a packet to the NMEA network 20 over the shipboard Ethernet network 10.

In addition, when the packet received by the alarm device 290 matches the packet broadcasted from the ship network detector 11, the manager server 300 may determine that the shipboard Ethernet network 10 is connected to NMEA devices on a shipboard operational technology (OT) network and, when the packet received by the alarm device 290 does not match the packet broadcasted from the ship network detector 11, the manager server 300 may determine that the alarm device is a rogue NMEA device.

In addition, a data frame of the Ethernet packet received from the ship network detector 11 may contain a CAN packet, and a source address of the CAN packet may be designated as the alarm device 290.

Referring to FIG. 2, a method for active detection of a rogue NMEA device according to another aspect of the present invention may include: a packet transmission step S10 in which a ship network detector 11 broadcasts a packet to an NMEA network over a shipboard Ethernet network 10 to detect NMEA devices; an alarm device designation step S11 in which an NMEA device having received a packet in the packet transmission step S10 is designated as an alarm device 29; a comparison step S12 in which a manager server 30 compares a packet received by the NMEA device designated as the alarm device 29 in the alarm device designation step S11 with the packet broadcasted from the ship network detector 11; and a determination step S13 in which, when the packet received by the alarm device 29 is confirmed to match the packet broadcasted from the ship network detector 11 in the comparison step S12, the manager server 30 determines that the shipboard Ethernet network 10 is connected to NMEA devices on a shipboard operational technology (OT) network and, when the packet received by the alarm device 29 is confirmed not to match the packet broadcasted from the ship network detector 11 in the comparison step S12, the manager server 30 determines that the alarm device 29 is a rogue NMEA device.

In addition, in the alarm device designation step S11, a data frame of the Ethernet packet received from the ship network detector 11 may contain a CAN packet, and a source address of the CAN packet may be designated as the alarm device 290.

In this way, the system and method for active detection of a rogue NMEA device according to the present invention can identify unauthorized Ethernet-to-NMEA connections in complex and vast shipboard IT/OT networks.

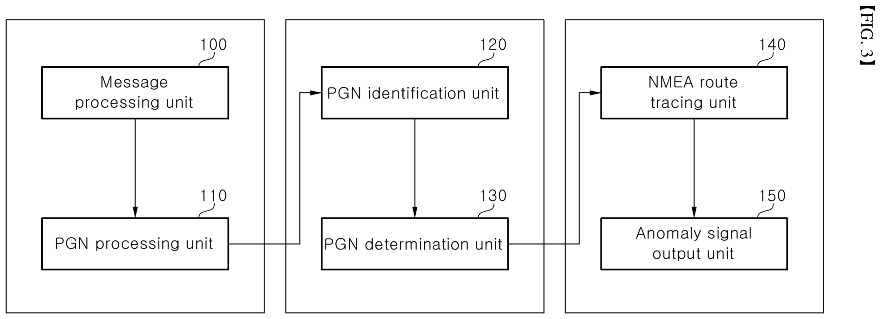

Next, a system and method for passive detection of a rogue NMEA device according to a further aspect of the present invention will be described with reference to FIG. 3 to FIG. 5.

FIG. 3 is a block diagram of a system for passive detection of a rogue NMEA device according to the present invention, and FIG. 3 is a diagram illustrating a process of extracting a PGN and a source address. Referring to FIG. 3, the system for passive detection of a rogue NMEA device includes: a message processing unit 100; a PGN processing unit 110; a PGN identification unit 120; a PGN determination unit 130; an NMEA route tracing unit 140; and an anomaly signal output unit 150.

In the system for passive detection of a rogue NMEA device according to the present invention, the message processing unit 100 receives input of a protocol packet delivered to an Ethernet interface via an NMEA gateway, confirms whether the input protocol packet is in NMEA format, and extracts a data frame stored in a payload field from the protocol packet when the protocol packet is confirmed to be in NMEA format.

Here, "NMEA" refers to a standard defined by the U.S. National Marine Electronics Association for transmitting information such as time, location, and bearing.

The PGN processing unit 110 may be configured to extract an NMEA-ID from the data frame extracted by the message processing unit 100 and to extract a PGN and a source address from the extracted NMEA-ID.

Here, "PGN (parameter group number)" is used to identify the type of data contained in a data field of a CAN message and functions similarly to a message ID in CAN communication.

The PGN identification unit 120 may be configured to compare the PGN and the source address extracted by the PGN processing unit 110 with a computer-based system (CBS) inventory, and the PGN determination unit may be configured to determine that a source of the protocol packet is a rogue NMEA device when the PGN value and the source address are conformed to be absent in the CBS inventory by the PGN identification unit 120.

The NMEA route tracing unit 140 may be configured to trace an NMEA route to identify a confirmed NMEA device as an abnormal NMEA device and identify a confirmed NMEA device as a normal NMEA device when the source of the protocol packet is determined to be a rogue NMEA device by the PGN determination unit 130.

The anomaly signal output unit 150 may be configured to output an anomaly signal to provide a notification when the source of the protocol packet is determined to be a rogue NMEA device by the PGN determination unit 130.

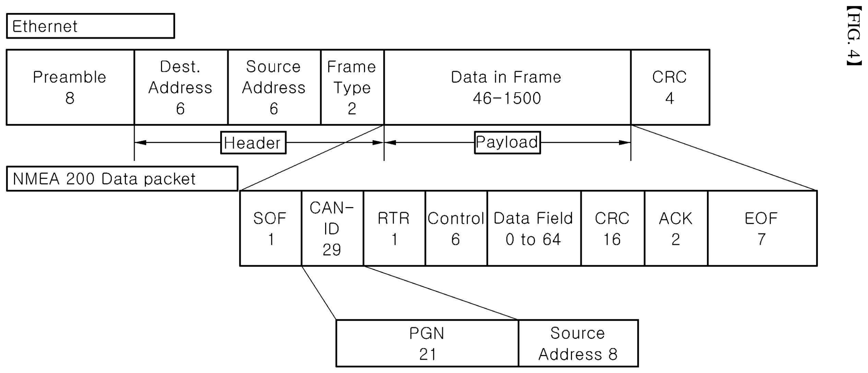

In addition, as shown in FIG. 4, the anomaly signal output unit 150 may recognize the source address in the header and the PGN and source address in the payload, as identified by the PGN identification unit, as a rogue NMEA device and output an anomaly signal indicative thereof.

In summary, upon receiving input of a protocol packet delivered to an Ethernet interface via an NMEA gateway, the message processing unit 100 extracts a data frame stored in a payload field from the protocol packet.

Subsequently, the PGN processing unit 110 extracts an NMEA-ID from the extracted data frame and extracts a PGN and a source address from the extracted NMEA-ID.

Subsequently, the PGN identification unit 120 compares the PGN value and the source address with a CBS inventory, and the PGN determination unit 130 determines that a source of the protocol packet is a rogue NMEA device when the PGN value and the source address are confirmed to absent in the CBS inventory.

Finally, the anomaly signal output unit 150 may recognizes a source address in the header and the PGN and source address in the payload, as identified by the PGN identification unit, as a rogue NMEA device and output an anomaly signal indicative thereof.

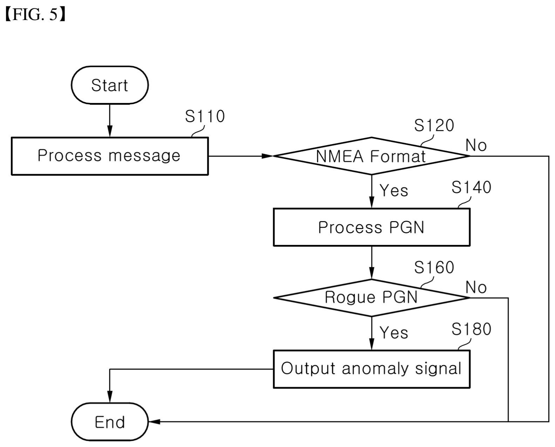

FIG. 5 is a flowchart of a method for passive detection of a rogue NMEA device according to the present invention. Referring to FIG. 5, the method for passive detection of a rogue NMEA device may include: an input step S100 in which a protocol packet delivered to an Ethernet interface via an NMEA gateway is input to a message processing unit 100; a data frame extraction step S120 in which the message processing unit 100 confirms whether the protocol packet input in the input step is in NMEA format and extracts a data frame stored in a payload field from the protocol packet when the protocol packet is confirmed to be in NMEA format; a PGN processing step S140 in which a PGN processing unit 110 extracts an NMEA-ID from the data frame extracted in the data frame extraction step and extracts a PGN and a source address from the extracted NMEA-ID; a determination step S160 in which a PGN identification unit compares the PGN and the source address extracted in the PGN processing step S140 with a CBS inventory and, when the PGN and the source address are absent in the CBS inventory, a PGN determination unit determines that a source of the protocol packet is a rogue NMEA device; and an anomaly signal output step S180 in which an anomaly signal output unit 150 outputs an anomaly signal to provide a notification when the source of the protocol packet is determined to be a rogue NMEA device in the determination step S160.

In addition, in the anomaly signal output step S180 of the method for passive detection of a rogue NMEA device according to the present invention, the anomaly signal output unit may recognize the source address in the header and the PGN and source address in the payload, as identified by the PGN identification unit, as a rogue NMEA device and output an anomaly signal indicative thereof.

In addition, the method for passive detection of a rogue NMEA device according to the present invention may further include: prior to the anomaly signal output step, an NMEA route tracing step in which, when the source of the protocol packet is determined to be a rogue NMEA device, an NMEA route is traced to identify an unconfirmed NMEA device as an abnormal NMEA device.

### [List of Reference numerals: Free text]

10: Ethernet network
11: Ship network detector
20: NMEA network
21, 22, 23, 24: NMEA Device
29: Alarm device
30: Manager server
100: Message processing unit
110: PGN processing unit
120: PGN identification unit
130: PGN determination unit
140: NMEA route tracing unit
150: Anomaly signal output unit

## Claims

1. A system for detection of a rogue NMEA device, comprising:
a ship network detector configured to broadcast a packet to an NMEA network over a shipboard Ethernet network to detect NMEA devices; and
an alarm device configured to set an alarm for a received NMEA device when any one of a plurality of NMEA devices receives a packet broadcast from a ship network detector; and
a manager server configured to compare a packet received by the alarm device with the packet broadcasted from the ship network detector,
wherein, when the packet received by the alarm device matches the packet broadcasted from the ship network detector, the manager server determines that the shipboard Ethernet network is connected to NMEA devices on a shipboard operational technology (OT) network and, when the packet received by the alarm device does not match the packet broadcasted from the ship network detector, the manager server determines that the alarm device is a rogue NMEA device.

2. The system according to claim 1, wherein
a data frame of the Ethernet packet broadcasted from the ship network detector contains a CAN packet, and
a source address of the CAN packet is designated as the alarm device.

3. A method for detection of a rogue NMEA device, comprising:
a packet transmission step in which a ship network detector broadcasts a packet to an NMEA network over a shipboard Ethernet network to detect NMEA devices;
an alarm device designation step in which an NMEA device having received the packet in the packet transmission step is designated as an alarm device;
a comparison step in which a manager server compares a packet received by the NMEA device designated as the alarm device in the alarm device designation step with the packet broadcasted from the ship network detector; and
a determination step in which, when the packet received by the alarm device is confirmed to match the packet broadcasted from the ship network detector, the manager server determines that the shipboard Ethernet network is connected to NMEA devices on a shipboard operational technology (OT) network and, when the packet received by the alarm device is confirmed not to match the packet broadcasted from the ship network detector, the manager server determines that the alarm device is a rogue NMEA device.

4. The method according to claim 3, wherein, in the alarm device designation step, a data frame of the Ethernet packet received from the ship network detector contains a CAN packet, and a source address of the CAN packet is designated as the alarm device.

5. A method for detection of a rogue NMEA device, comprising:
an input step in which a protocol packet delivered to an Ethernet interface via an NMEA gateway is input to a message processing unit;
a data frame extraction step in which the message processing unit confirms whether the protocol packet input in the input step is in NMEA format and extracts a data frame stored in a payload field from the protocol packet when the protocol packet is confirmed to be in NMEA format;
a PGN processing step in which a PGN processing unit extracts an NMEA-ID from the data frame extracted in the data frame extraction step and extracts a PGN and a source address from the extracted NMEA-ID;
a determination step in which a PGN identification unit compares the PGN and the source address extracted in the PGN processing step with a CBS inventory and a PGN determination unit determines that a source of the protocol packet is a rogue NMEA device when the PGN and the source address are confirmed to be absent in the CBS inventory; and
an anomaly signal output step in which an anomaly signal output unit outputs an anomaly signal to provide a notification when the source of the protocol packet is determined to be a rogue NMEA device in the determination step.

6. The method according to claim 5, wherein, in the anomaly signal output step, the anomaly signal output unit may recognize the source address in the header and the PGN and source address in the payload, as identified by the PGN identification unit, a rogue NMEA device and output an anomaly signal indicative thereof.

7. The method according to claim 5, further comprising: prior to the anomaly signal output step;
an NMEA route tracing step in which, when the source of the protocol packet is determined to be a rogue NMEA device, an NMEA route is traced to identify an unconfirmed NMEA device as an abnormal NMEA device.

8. A system for detection of a rogue NMEA device, comprising:
a message processing unit configured to receive input of a protocol packet delivered to an Ethernet interface via an NMEA gateway, to confirm whether the input protocol packet is in NMEA format, and to extract a data frame stored in a payload filed from the protocol packet when the protocol packet is confirmed to be in NMEA format;
a PGN processing unit configured to extract an NMEA-ID from the data frame extracted by the message processing unit and to extract a PGN and a source address from the extracted NMEA-ID;
a PGN identification unit configured to compares the PGN and the source address extracted by the PGN processing unit with a CBS inventory;
a PGN determination unit configured to determine that a source of the protocol packet is a rogue NMEA device when the PGN and the source address are confirmed to be absent in the CBS inventory; and
an anomaly signal output unit configured to output an anomaly signal to provide a notification when the source of the protocol packet is determined to be a rogue NMEA device by the PGN determination unit.

9. The system according to claim 8, wherein the anomaly signal output unit recognizes the source address in the header and the PGN and source address in the payload, as identified by the PGN identification unit, as a rogue NMEA device and output an anomaly signal indicative thereof.

10. The system according to claim 8, further comprising:
an NMEA route tracing unit configured to trace an NMEA route and identify an unconfirmed NMEA device as an abnormal NMEA device when the source of the protocol packet is determined to be a rogue NMEA device by the PGN determination unit.
